# DEMANDE DE BREVET EUROPEEN

(11) **EP 2 508 281 A1**
(43) Date de publication de la demande: **10.10.2012**
(21) Numéro de dépôt: 11161230.5
(22) Date de dépôt: 05.04.2011
(51) Int. Cl.: B23B 29/26, B23B 31/02, B23B 31/107

(54) **Un porte-outil pour une machine-outil**

(71) Demandeur: Pibomulti S.A., 2400 Le Locle (CH)
(72) Inventeur: Boschi, Pierre, 2400 Le Locle (CH); Vuille, Jean-Michel, 2300 La Chaux-de-Fonds (CH); Favet, Valéry, 25500 La Chenalotte (FR)
(74) Mandataire: BOVARD AG

(57) **Abrégé**

L'invention prévoit un système de porte-outil pour le support d'au moins un outil d'usinage dans une machine outil. Le système de porte-outil comprend : un tour d'usinage capable d'être déplacé sous contrôle d'une commande numérique ; un porte-outil, agencé à recevoir un outil d'usinage, le porte-outil comprenant un axe principal longitudinal, le tour d'usinage comprenant au moins une douille, agencé à recevoir le porte-outil. Le tour comprend des moyens de réglage manuel de positionnement de la douille, relatif au tour d'usinage et selon l'axe principal longitudinal du porte-outil, et les moyens de réglage sont accessible à un opérateur depuis une région latérale de ladite douille relatif à l'axe principal longitudinal du porte-outil.

## Description

L'invention se rapporte à un porte-outil pour une machine-outil, par exemple de tournage ou de fraisage, et en particulier, mais non-exclusivement, à un bloc porte-outil à plusieurs porte-outils individuels, par exemple dans une machine-outil multibarre.

Une machine-outil comprend classiquement au moins un outil interchangeable. Afin de permettre un changement rapide d'outil, chaque outil est monté dans un support standardisé, dit porte-outil. Le terme outil est utilisé dans ce texte pour indiquer des outils pour toutes sortes d'usinage à machine, tels que tournage, perçage, fraisage, tronçonnage, filetage etc.

Un résultat que la présente invention vise à obtenir est un système de réglage fin du positionnement d'outil dans une machine outil, qui permet une construction tour et/ou de porte-outil plus compacte et plus précise, plus facilement accessible à l'opérateur, et qui permet le réglage de positionnement d'outil hors de la machine.

A ce but, l'invention prévoit un système de porte-outil pour le support d'au moins un outil d'usinage dans une machine outil, le système de porte-outil comprenant :
un tour d'usinage capable d'être déplacé sous contrôle d'une commande numérique,
un porte-outil, agencé à recevoir un outil d'usinage, le porte-outil comprenant un axe principal longitudinal,
le tour d'usinage comprenant au moins une douille, agencé à recevoir le porte-outil,
le système étant caractérisé en ce que:
le tour comprend des moyens de réglage manuel de positionnement de la douille, relatif au tour d'usinage et selon l'axe principal longitudinal du porte-outil,
les moyens de réglage étant accessible à un opérateur depuis une région latérale de ladite douille relatif à l'axe principal longitudinal du porte-outil.

Selon une variante du système de l'invention,

lesdits moyens de réglage comprennent un élément de ressort agencé à solliciter un déplacement axial de ladite douille relatif au tour dans un premier sens parallèle à l'axe principal longitudinal, et lesdits moyens de réglage comprennent un moyen d'appui agencé d'effectuer un déplacement axial de la douille dans un deuxième sens opposée au premier sens.

Selon une variante du système de l'invention, le moyen d'appui comprend une vis ayant une région conique agencé à appuyer sur une région correspondante de la douille telle que, la région ayant une surface à pente correspondant en pente de la région conique telle que, quand la vis est tournée, la douille se déplace longitudinalement dans le tour selon l'axe principal longitudinal.

Selon une variante du système de l'invention, l'élément ressort est disposé tel que le premier sens est vers l'intérieur du tour.

Selon une variante du système de l'invention, le porte-outil est serré dans la douille par des moyens de serrage latéraux.

Selon une variante du système de l'invention, le porte-outil est muni d'une queue conique creuse et compressible telle que, quand le porte-outil est serré dans la douille par des moyens de serrage latéraux, la queue conique creuse étant comprimée avec une sensible déformation concentrique contre une surface conique correspondante de réception de la douille.

Selon une variante du système de l'invention, le tour d'usinage comprend une pluralité de porte-outils, chaque porte-outil étant monté dans une douille à réglage axiale individuelle.

Selon une variante du système de l'invention, les moyens de réglage sont munis des échelles vernier.

L'invention sera bien comprise à la lecture de la description ci-après faite à titre d'exemple non limitatif, en regardant des dessins ci-annexés qui représentent schématiquement :
figures 1 et 1a, une vue en section d'un exemple du système de réglage axial d'un porte-outil selon la présente invention.
figures 2 et 2a, une vue en section de l'exemple des figures 1 et 1a, avec l'addition d'un moyen de réglage du ressort.
figure 3, une variante de l'invention, avec réglage radial de l'outil.
figures, 4, 4a et 4b, des vue en section d'une réalisation de l'invention avec porte-outil à cône creux compressible.
figure 5, une réalisation de l'invention avec plusieurs stations de porte-outil individuellement réglable, à outils statiques.
figure 6, une réalisation de l'invention avec douille montée dans une cartouche échangeable.
figure 7, une réalisation de l'invention avec douille montée dans une cartouche échangeable à réglage et serrage interne.
figure 8, une vue projection de la cartouche de figure 6 ou figure 7

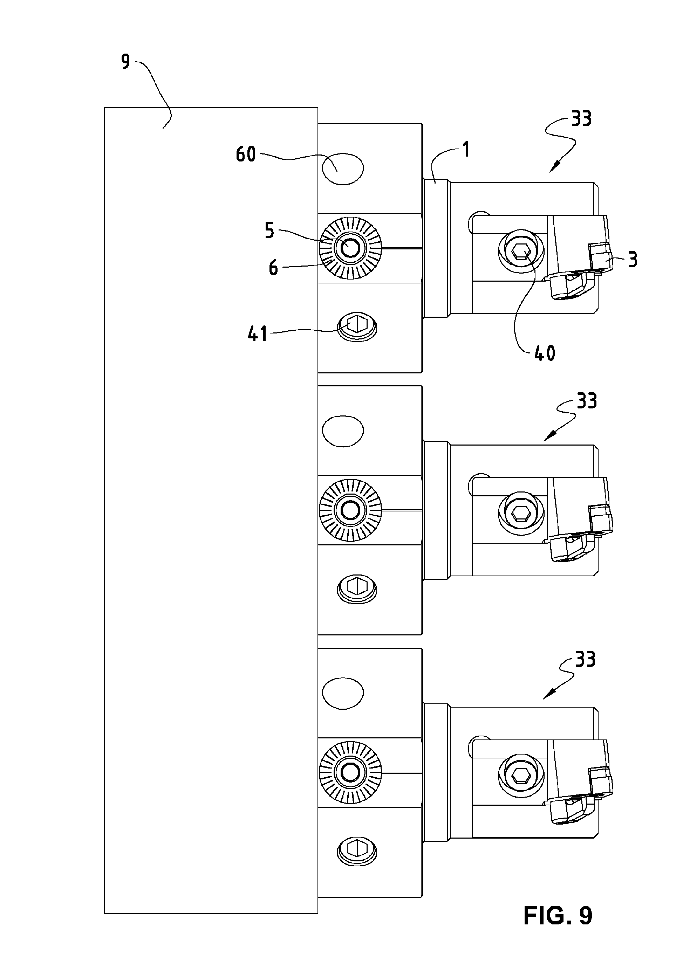

figure 9, une vue en plan d'un tour munie de trois cartouches réglables de figure 8.
figure 10, une réalisation de l'invention avec plusieurs stations de porte-outil individuellement réglable, à outils rotatifs (fraisage).
figure 11, une variante de l'invention, avec réglage radial de l'outil.

Les mêmes numéros de référence indiquent les éléments correspondants dans les différentes figures.

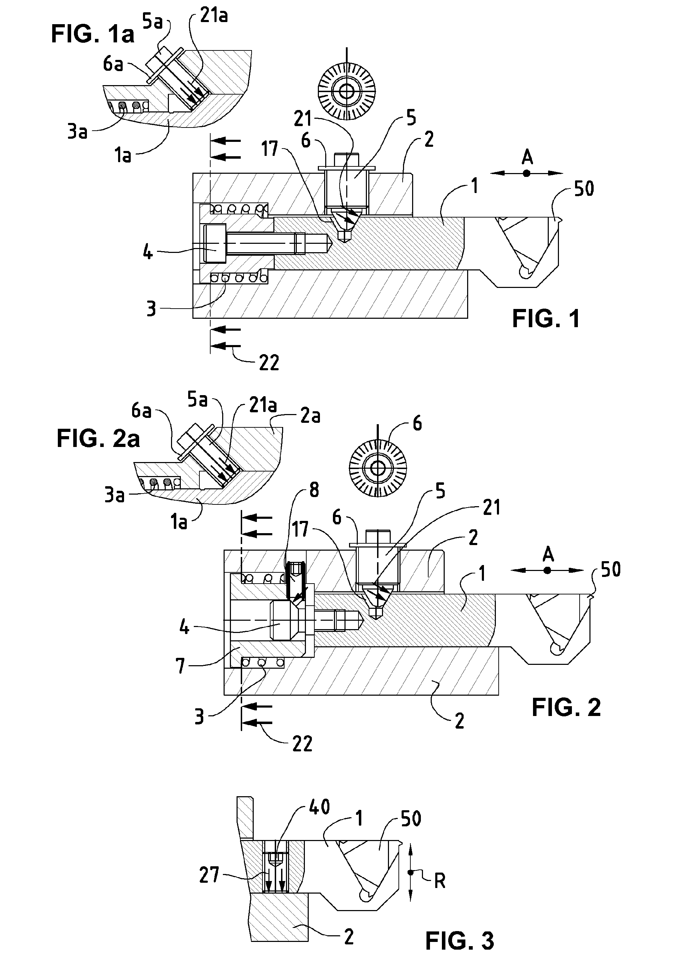

Les figures 1 et 2 montre une première configuration d'un porte-outil selon l'invention. Le porte-outil 1 est monté dans une douille 2 d'une façon que le porte-outil est déplaçable axialement (direction de déplacement indique par la flèche A) dans la douille 2. Dans l'exemple illustre, l'outil est une plaquette 50 à trois arêtes. Le ressort 3 sert à solliciter un déplacement du porte-outil 1 vers la droite (dans la figure 1). Une vis de fixation 4 tient la partie arrière 7 au porte-outil 1. Dans le figure 2, une vis sert à bloquer un déplacement du porte-outil vers l'extérieure du tour 9. Le réglage axial du porte-outil est accompli en tournant la vis de réglage micromatique 5, qui est muni d'une échelle vernier et d'un point conique pour appliquer plus ou moins force 21 contre une détente de forme aussi conique dans le porte-outil 1. Alternativement, la vis de réglage peut être conçue comme illustre dans la figure 1a, avec un bout plat, appuyant sur une surface correspondante du porte-outil 1.

Dans une variante de l'invention est illustrée dans la figure 3, dans laquelle une vis de déformation radial est utilise pour régler le positionnement radial du porte-outil.

### PRINCIPE DE CARTOUCHE PORTE-OUTIL INTERCHANGEABLE À RÉGLAGE FIN AXIAL INDIVIDUEL

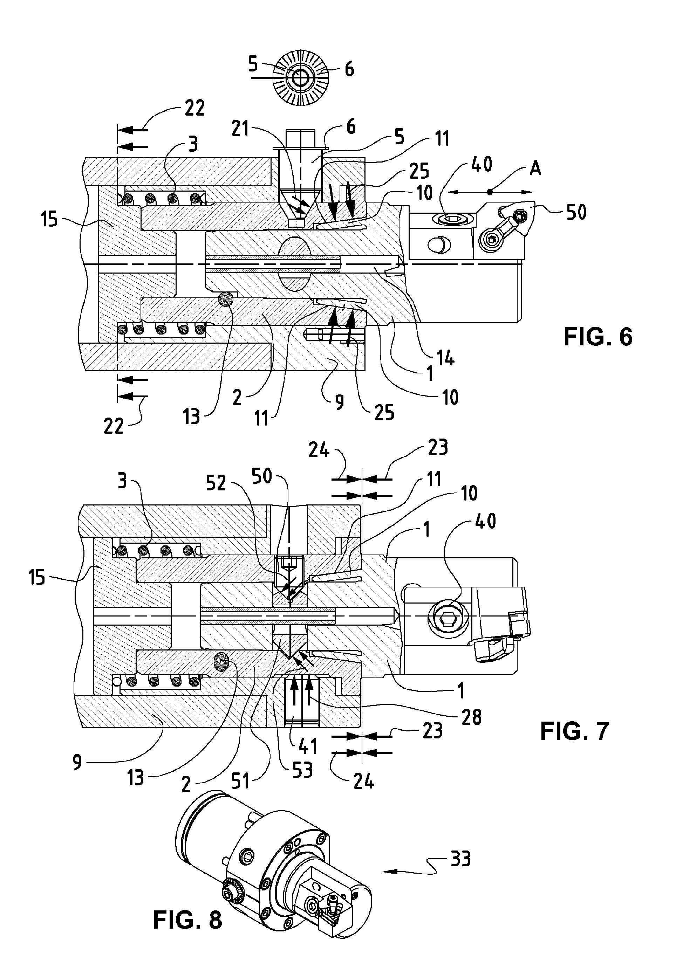

En se référant aux figures 6, 7 et 8, l'ensemble de la cartouche est fixé sur la base. Les cartouches étant montées les unes à côté des autres, dans la base il est possible de régler la position des outils indépendamment d'une cartouche à l'autre.

Dans la cartouche est montée une douille coulissante 2, celle-ci étant actionnée par le ressort 3 et le chapeau 15. La douille 2 est également orientée par la goupille ou clavette N° 3.

Sur la cartouche est également montée une vis micrométrique 5 et son vernier 6. A l'aide du ressort 3 et de la vis 5, il est possible de faire bouger en avant et en arrière la douille porte-outil 2. La vis ou les vis 41 vont bloquer la douille 2 dans la position souhaitée.

Le porte-outil ou porte plaquette à cône face creux compressible est mis en place dans la douille 2. En vissant la vis 50 sur son insert 51, cet insert viendra agir en traction sur le porte-outil jusqu'au blocage de la face du porte-outil. Nous aurons un tube 14 qui rendra prisonnier l'insert 51 et servira également de conduit pour l'arrosage par le centre ou le passage d'air.

Le porte-outil étant en place, nous pouvons maintenant desserrer la vis ou les vis 41, agir sur la vis 5 et nous pourrons régler très précisément un outil par rapport à l'autre et cela permettra de travailler plusieurs pièces simultanément avec une très grande précision.

Le principe de ce réglage fin individuel peut être également exécuté avec des porte-outil de section carré, rectangulaire, triangulaire, hexagonal et tous les polygones. Pour cela, il est nécessaire d'avoir toujours une vis de réglage micrométrique, un ressort de rappel puissant et d'avoir une vis de blocage orientée permettant la répartition des forces de blocage sur 2 faces d'appui.

### BLOC PORTE-OUTIL DE TOURNAGE MULTIPLE POUR MACHINE MULTIBARRE AVEC PORTE-OUTIL INTERCHANGEABLE À RÉGLAGE FIN INDIVIDUEL (PORTE-OUTIL À CÔNE CREUX COMPRESSIBLE)

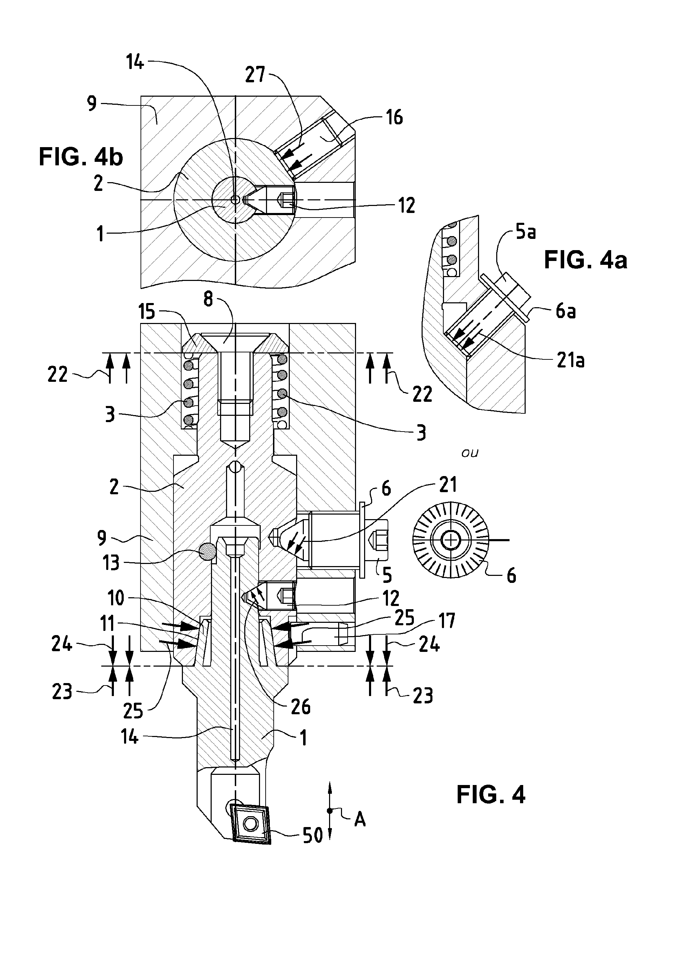

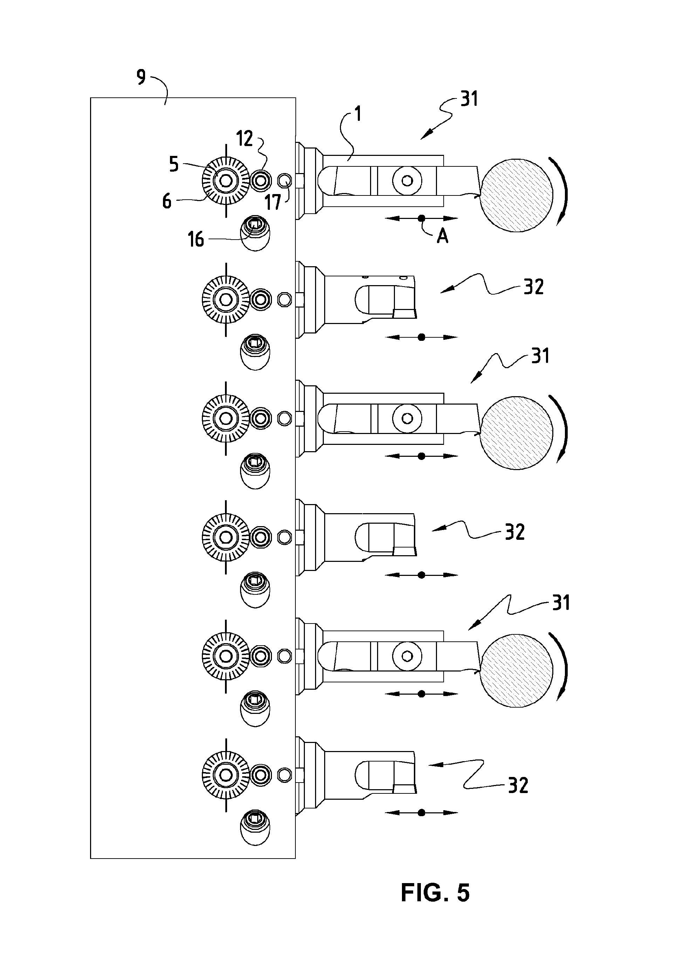

Pour pouvoir usiner plusieurs pièces en simultané sur un tour multibroche à CNC disposant d'un seul contrôle par axe, il est nécessaire d'avoir des dispositifs porte-outil à changement rapide et de pouvoir faire les corrections d'un outil à l'autre de manière très simple et précise et sans perte de temps. L'invention présentée permet tous ces avantages. Pour cela il est nécessaire que les entraxes des outils correspondent aux entraxes des broches machines. La figure 5 montre un exemple de 2x3 outils d'usinage. Les figures 4, 4a et 4b montrent le principe de réglage en profondeur indépendant d'un outil à l'autre.

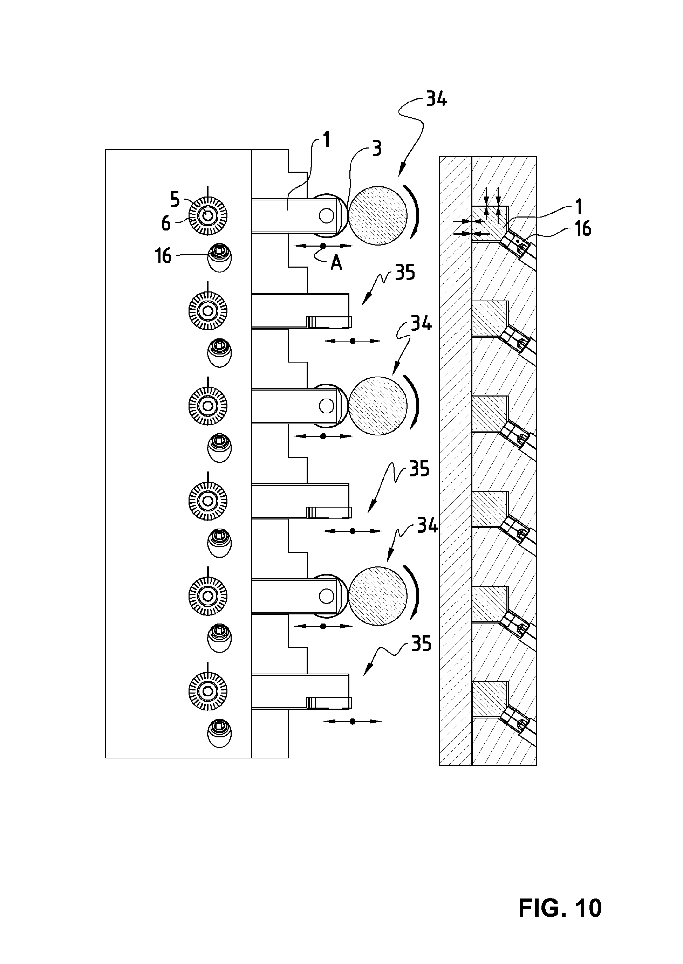

Ce principe de réglage fin peut être réalisé par des outils à cône creux compressible ou par des sections de porte-outil carré, rectangulaire ou polygonale (figures 1, 1a, 2, 2a, 3 and 10).

Dans la figure 1 est montée une douille activée par un puissant ressort 3, l'orientation de la douille est garantie par la goupille ou clavette, par la vis micrométrique 5 et son vernier 6. Il est possible de faire avancer la douille en vissant la vis 5. En desserrant la vis 5 la douille recule sous l'effet du ressort. La bonne position atteinte, la douille sera bloquée par 1 ou plusieurs vis. La douille sert de réceptacle du porte-outil 1. Le tout est monté dans un bloc 2.

Dans l'exemple décrit, le porte burin ou porte plaquette 1, par sa conception de cône face creux compressible à serrage latéral, est ramené en position fixe en contact avec la douille 2 par la vis pointeau 12 et l'orientation de l'outil et la force de transmission sera garantie par l'insert 13, le tout étant en place. Il suffit maintenant de desserrer la vis ou les vis 16 et d'actionner la vis 5 pour faire avancer ou reculer l'outil ou de dévisser la vis 12 pour changer le porte-outil 1.

Dans certains cas, la vis 5 peut être remplacée par la vis 5a et son vernier 6a. Une vis situe à l'arrière de la douille 2.

Le porte-outil 1 de tournage peut recevoir tout type de plaquette ou burin.

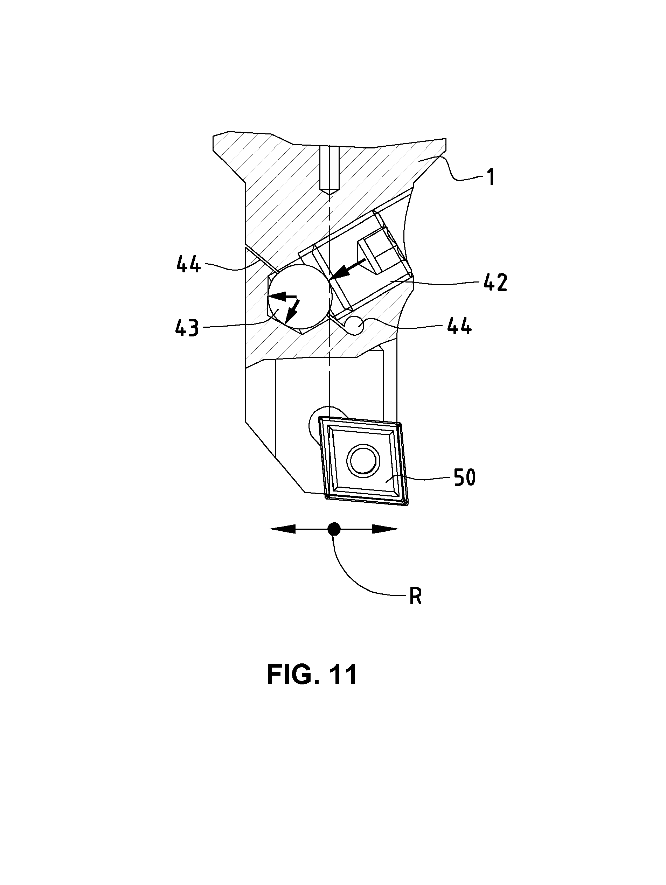

Il est reconnu que les assises de plaquettes dans les porte-outils ne sont pas toujours précises de même que les plaquettes présentent des dimensions irrégulières entre elles. Pour compenser ces problèmes, il est possible d'agir directement sur le porte-outil (figure 11) en créant une zone de déformation dans l'outil 1 par une fente. A l'aide d'une vis 42 agissant sur une bille ou insert ou sur le bloc, il est possible de faire avancer la plaquette dans le sens longitudinal et ainsi avoir tous les outils sur un même plan (figure 11).

Ce réglage peut être effectué sur un banc de mesure grâce au système de changement rapide et E la précision de positionnement de ce principe de porte-outil à cône creux compressible.

### PORTE-OUTIL À CÔNE CREUX COMPRESSIBLE POUR MACHINE À CHANGEUR D'OUTIL AUTOMATIQUE

Les porte-outils à cône creux actuels présentent beaucoup de désavantages à la présente invention.

Le principal avantage de la présente invention est de réduire les masses en mouvement dynamique en réduisant la taille des broches et le poids des porte-outils.

Dans les principes actuels HSK la taille la plus petite est 0 extérieur 25. Dans la présente invention la taille extérieure est de ISO 10 voir plus petit donc ce principe permet d'obtenir une plus grande vitesse de rotation, réduction taille roulement et masse de porte-outil. Il est bien adapté au besoin actuel dans la micromécanique, le dentaire, le médical...

Ce principe peut être adapté aux normes ISO 10, 20, 25, 30, 35, 40, 45, 50, 60.

Ce principe permet d'utiliser tous les systèmes de prises d'outil connus : à pince, à frettage, Weldon, Wistle Notch, hydraulique, porte fraise.

### PRINCIPE DE PORTE-OUTIL DE TRÈS HAUTE PRÉCISION À CÔNE FACE À CÔNE CREUX COMPRESSIBLE

La présente invention du porte-outil à cône face creux compressible à serrage latéral présente l'avantage d'être utilisé en statique ou en dynamique.

Utilisé en dynamique, les porte-outils actuels à cône face creux présentent beaucoup de désavantages dans l'utilisation des outils de coupe, mèches de perçage, fraises, alésoirs, burins de tournage.

De par leur conception, ils ont un porte à faux important de la pointe de l'outil en rapport au porté de roulement.

Les dimensions de broches extérieures sont également plus grosses ce qui nécessite des roulements à billes de tailles plus importantes, de fait limite la vitesse de rotation.

Le porte à faux des broches à cône creux actuel à serrage latéral a pour principal inconvénient d'engendrer des vibrations sur les outils, de réduire la durée de vie de ceux-ci, réduire la durée de vie des roulements.

La plus grande dimension des broches porte-outils à cône creux actuel a pour inconvénient d'entraîner des masses plus importantes, d'avoir des roulements de plus grande section et surtout la masse des porte-outils est très importante ce qui engendre une destruction prématurée des éléments mécaniques à haute vitesse de rotation exigeant une grande énergie dynamique.

La conception actuelle des cônes creux à serrage latéral ne favorise pas la construction des outils multiples en regard avec les inconvénients cités précédemment.

L'invention des porte-outil à cône creux compressible à serrage latéral ci-après présente beaucoup d'avantage en éliminant les inconvénients cités plus haut: broches de dimensions plus petites, facilite la construction des outils multiples, permet d'utiliser des roulements de sections réduites ce qui permet d'augmenter les vitesses de rotation, réduit le porte à faux entre la pointe de l'outil et les portées de roulements, réduit les masses, moins d'énergie dynamique, une plus grande longévité des outils de coupe, moins de vibrations, une plus grande longévité des roulements et des éléments mécaniques à l'utilisation car moins sollicités. Par exemple le porte à faux technique ci-dessous démontre clairement les avantages. Corps de broches plus petit, dimensions roulement plus petit pour un même type de porte pince, porte à faux de l'outil réduit, masse et dimension du porte-outil réduits. De ce fait, la présente invention a l'avantage de pouvoir bloquer des porte-outils par des serrages manuels latéraux d'une manière très simples, peu encombrante et très efficaces.

### Exemple:

Avantages: moins de porte à faux depuis la face de roulement à la pointe outil, élément tournant dimension réduite et surtout le porte-outil HSK est plus volumineux, plus lourd, nuisible aux hautes vitesses et à la rigidité.

Dans une variante le porte-outil est inséré dans l'élément tournant et mis en position par la clavette et bloqué par 1 ou 2 vis latérale qui par blocage déformera le cône creux et celui-ci viendra se plaquer à la face de l'élément tournant.

La présente invention peut être bloquée par 1 ou 2 vis de traction ceci pour avoir un meilleur équilibrage. Tous les porte-outils de la présente invention peuvent être préréglables sur un banc de préréglage classique tout en assurant une très grande précision de répétition à l'utilisation.

Dans une variante, le porte-outil préréglé sera bloqué en position broche en cône face par les vis.

On peut avoir un porte-outil et la mise de longueur et la prise d'outil avec le système Wistle Notch ou Weldon.

On peut aussi avoir un porte-outil et la mise de longueur et la prise d'outil par frettage.

On peut aussi avoir un porte-outil à serrage hydraulique.

On peut aussi avoir un porte-outil avec le montage d'une fraise disque.

On peut aussi avoir un porte-outil avec le montage d'une fraise en haut.

### PRINCIPE DE PORTE-OUTIL DE TRÈS HAUTE PRÉCISION À CÔNE FACE CREUX COMPRESSIBLE À SERRAGE LATÉRAL

La présente invention du porte-outil à cône face creuse compressible présente l'avantage d'être utilisé en statique ou en dynamique.

Les porte-outils actuels à cône face creuse présentent beaucoup de désavantages dans leur utilisation. Dans l'utilisation en statique, ils sont très volumineux selon les types (HSK, CAPTO) ce qui nécessite des blocs porte-outil de plus grandes dimensions et ce fait réduit le nombre d'outils sur une machine ou augmente les courses et dimensions de la machine et son prix.

Dans la plus grande partie des opérations à effectuer les porte-outils actuels à cône creux à serrage latéral sont inadaptés aux exigences et contraintes du marché.

La présente invention présente beaucoup d'avantages:
- Elle réduit les espaces entre chaque outil ainsi que les porte à faux depuis la base d'appui de référence à l'extrémité des outils qui sont des critères importants dans la construction de machine et dans l'utilisation des outils.
- On peut utiliser le principe d'adaptation du cône face à cône creux compressible à serrage latéral.
- On peut avoir un bloc porte-outil avec des entraxes très réduits par rapport au système existant. Ce principe est très important pour les machines usinant de petites pièces (décolletage).
- La présente invention présente également les avantages d'être plus simple et moins coûteux. Dans un bloc de montage multiple, ce principe permet de réduire les temps morts sur les machines et donc il augmente la productivité.
- De plus, la présente invention garantit une précision de répétition de 0,002mm dans le changement d'outil et il permet également le préréglage à l'extérieur de la machine.
- Le principe de blocage d'outil latéral est très simple. Le porte-outil ou porte plaquette à serrage latéral est inséré dans un support de forme cylindrique. Il est orienté par un insert ou clavette et bloqué par une vis.

On peut avoir un bloc porte-outil à cône face compressible à serrage latéral avec des entraxes réduits en comparaison avec les systèmes actuels (HSK ou CAPTO).

On peut utiliser des divers porte-outils statiques avec fixation par 1 ou 2 vis latérale.

Le porte-outil à cône creux compressible permet la mise de longueur des outils sur un banc de préréglage classique. On peut avoir un porte-outil à pince, une vis de mise de longueur, pince et l'écrou de même que l'outil serré en position d'après la face d'appui du cône compressible.

On peut avoir un porte-outil, la mise de longueur et la prise d'outil avec le système Wistle Notch ou Weldon.

On peut aussi avoir un porte-outil et la mise de longueur et la prise d'outil par frettage.

On peut aussi avoir un porte-outil avec le montage d'un outil à serrage hydraulique.

On peut aussi avoir un porte-outil de tournage à plaquette amovible.

## Revendications

1. Système de porte-outil pour le support d'au moins un outil d'usinage (3) dans une machine outil, le système de porte-outil comprenant :
tour d'usinage (9) capable d'être déplacé sous contrôle d'une commande numérique,
un porte-outil (1), agencé à recevoir un outil d'usinage (3), le porte-outil (1) comprenant un axe principal longitudinal (A),
le tour d'usinage (9) comprenant au moins une douille (2), agencé à recevoir le porte-outil (1),
le système étant **caractérisé en ce que**:
le tour (9) comprend des moyens (5, 5a, 6, 6a) de réglage manuel de positionnement de la douille (2), relatif au tour d'usinage (9) et selon l'axe principal longitudinal du porte-outil (1),
les moyens de réglage (5, 5a, 6, 6a) étant accessible à un opérateur depuis une région latérale de ladite douille (2) relatif à l'axe principal longitudinal du porte-outil (1).

2. Système selon la revendication 1, dans lequel:
lesdits moyens de réglage (5, 5a, 6, 6a) comprennent un élément de ressort (3,7,8) agencé à solliciter un déplacement axial (A) de ladite douille (2) relatif à la tour (9) dans un premier sens parallèle à l'axe principal longitudinal (A), et
lesdits moyens de réglage (5, 5a, 6, 6a) comprennent un moyen d'appui (5,5a,6,6a) agencé d'effectuer un déplacement axiale (A) de la douille (2) dans un deuxième sens opposée au premier sens.

3. Système selon l'une des revendications 1 ou 2, dans lequel le moyen d'appui (5,5a,6,6a) comprend une vis ayant une région conique agencé à appuyer sur une région correspondante de la douille tel que, la région ayant une surface à pente correspondant à la pente de la région conique tel que, quand la vis est tourné, la douille se déplace longitudinalement dans la tour selon l'axe principal longitudinal (A).

4. Système selon l'une des revendications précédentes, dans lequel l'élément ressort (3,7,8) est disposé tel que le premier sens est vers l'intérieur du tour.

5. Système selon l'une des revendications précédentes, dans lequel le porte-outil (1) est serré dans la douille (2) par des moyens de serrage latéral (12, 51, 52).

6. Système selon la revendication 5, dans lequel le porte-outil (1) est muni d'une queue conique (10) creux et compressible tel que, quand le porte-outil (1) est serré dans la douille (2) par des moyens de serrage latéral (12, 51, 52), la queue conique creux (10) est comprimée avec une sensible déformation concentrique contre une surface conique correspondante de réception (11) de la douille (2).

7. Système selon l'une des revendications précédentes, dans lequel la tour d'usinage (9) comprend une pluralité de porte-outils (1, 31, 32, 33, 34, 35), chaque porte-outil étant monté dans une douille (2) à réglage axial individuel (5, 5a, 6, 6a).

8. Système selon l'une des revendications précédentes, dans lequel les moyens de réglage (5,5a) sont munis d'échelles vernier (6, 6a).
